# EUROPEAN PATENT APPLICATION

(11) **EP 3 816 245 A1**
(43) Date of publication of application: **05.05.2021**
(21) Application number: 19827549.7
(22) Date of filing: 19.06.2019
(51) Int. Cl.: C09D 127/12, C09D 7/63, C09D 7/65, C09D 127/04, C09D 127/18

(54) **FLUORORESIN-CONTAINING BAKEABLE POWDER COATING COMPOSITION AND LIQUID COATING COMPOSITION, AND COATING AND COATED BODY COMPRISING THIS BAKEABLE POWDER COATING COMPOSITION OR LIQUID COATING COMPOSITION**

(30) Priority: 26.06.2018 JP 2018121300
(71) Applicant: Nippon Fusso CO., LTD., Osaka 587-0042 (JP)
(72) Inventor: FUKUMURA, Naoki, Sakai-shi, Osaka 587-0042 (JP)
(74) Representative: KIPA AB
(86) International application number: PCT/JP2019/024359
(87) International publication number: WO 2020/004197

(57) **Abstract**

The present invention addresses the problem of providing powder paint compositions and liquid paint compositions for baking, which have excellent corrosion resistance and workability as well as high durability and chemical resistance, and form a good lining film free from failures such as cracks; and a coating film and coated objects comprising such powder paint compositions or liquid paint compositions for baking. Powder paint compositions for baking comprise fluororesin where one or more types of porous coordination polymer (PCP) / metal-organic framework (MOF) formed by coordinate bonds between organic ligands and central metals disperse.

## Description

### [BACKGROUND OF THE INVENTION]

### [Field of the Invention]

The present invention relates to powder paint compositions baking and liquid paint compositions for baking comprising fluororesin, and a coating film and coated objects comprising such powder paint compositions or liquid paint compositions for baking. More specifically, the present invention relates to powder paint compositions and liquid paint compositions for baking comprising fluororesin where porous coordination polymer (PCP) / metal-organic framework (MOF) formed by coordinate bonds between organic ligands and central metals disperses, and a coating film and coated objects comprising such powder paint compositions or liquid paint compositions for baking.

### [Description of Related Art]

Fluororesin is excellent in heat resistance, corrosion resistance, water repellence, antifouling property, lubricity, abrasion resistance and so on, and is used as a lining film for metallic base materials.

For example, Patent Document 1 discloses a device coated by a lining film comprising fluororesin with improved corrosion resistance against hydrofluoric acid. Patent Document 1 discloses that mixing fillers into fluororesin power paints for better corrosion resistance against hydrofluoric acid has provided a lining film which is highly durable with less contraction.
[Patent Document 1] Japanese Patent Application No. 1999-241045

### [BRIEF SUMMARY OF THE INVENTION]

### [Problems to be solved by the Invention]

However, as Patent Document 1 describes, using fillers could make the lining film more permeable to chemical solutions. Such higher permeability could cause a problem where the lining film becomes more susceptible to corrosion. In other words, it lowers the corrosion resistance of the lining film. In addition, employing fillers could cause another problem which lowers workability of the lining film.

The present invention has been proposed in view of above problems, and aims to provide powder paint compositions and liquid paint compositions for baking, which have excellent corrosion resistance and workability as well as high durability and chemical resistance, and form a good lining film free from failures such as cracks; and a coating film and coated objects comprising such powder paint compositions or liquid paint compositions for baking.

### [Means for Solving the Problems]

Powder paint compositions for baking comprising fluororesin in the present invention relate to the powder paint compositions for baking comprising fluororesin where porous coordination polymer (PCP) / metal-organic framework (MOF) formed by coordinate bonds between organic ligands and central metals disperses.

With the use of thermoplastics, the powder paint can use resins insoluble in solvents and provide a coating film with higher solvent resistance.

The porous coordination polymer (PCP) / metal-organic framework (MOF) is in a powder form, and its 5% decomposition temperature from 200 °C under the condition in ambient air measured by Thermogravimeter-Differential Thermal Analysis (TG-DTA) is higher than the melting point of the fluororesin, and 0.02 wt% - 20.00 wt% of the porous coordination polymer (PCP) / metal-organic framework (MOF) is formulated with respect to the entire powder paint compositions for baking.

The fluororesin is thermoplastic, and insoluble in both polar solvents and nonpolar solvents, and 70.00 wt% - 99.98 wt% of the fluororesin is formulated with respect to the entire powder paint compositions for baking.

According to such powder paint compositions for baking, it is possible to provide powder paint compositions for baking, having excellent durability, chemical resistance, permeability resistance and corrosion resistance, and being able to form a good lining film free from failures such as cracks.

In case the formulation amount of the porous coordination polymer (PCP) / metal-organic framework (MOF) is insufficient with respect to the entire powder paint compositions for baking, it is not possible to attain desired sufficient durability, chemical resistance, corrosion resistance, or the like. In addition, excessive formulation amount fails to form a coating film over the base material.

More preferably, the formulation amount of the porous coordination polymer (PCP) / metal-organic framework (MOF) is 0.10 wt% - 5.50 wt% with respect to the entire powder paint compositions for baking.

Preferably, the central metals are present as one or more metal ions selected from a group consisting of Al³⁺, Co³⁺, Co²⁺, Ni²⁺, Ni⁺, Cu²⁺, Cu⁺, Zn²⁺, Fe³⁺, Fe²⁺, Ti³⁺, and Zr⁴⁺, and the metal ions are present in the porous coordination polymer (PCP) / metal-organic framework (MOF) by coordinately binding to the organic ligands.

According to such a configuration, the pore structure changes depending on the valence of the metal ions, enabling to adjust durability, chemical resistance, corrosion resistance, heat resistance, and the like as necessary.

Preferably, at least one of the central metals carries one or more anions, and the central metals are present in the porous coordination polymer (PCP) / metal-organic framework (MOF) by coordinately binding to the organic ligands.

According to such a configuration, a polymer structure is formed having pore structures therein which prevents or delays the permeance of a component lowering the durability of the coating film, therefore, it is possible to obtain powder paint compositions for baking which provide a lining film with excellent durability.

Preferably, the anion comprises one or more types of anions selected from a group consisting of OH⁻, CO₃²⁻, and O²⁻.

According to such a configuration, OH⁻, CO₃²⁻, and O²⁻ interact with chemicals, enabling to obtain powder paint compositions for baking which provide a coating film with better corrosion resistance and chemical resistance.

Preferably, at least one central metal together with the anions forms oxo structures.

According to such a configuration, the oxo structures interact with chemicals, enabling to obtain powder paint compositions for baking which provide a coating film with better corrosion resistance and chemical resistance.

Preferably, the organic ligands comprise one or more types of organic ligands selected from a group consisting of 1,4-benzenedicarboxylic acid, 1,3,5-benzene tricarboxylic acid, 4,4'-bipyridyl, imidazole, 1,3,5-tris(4-carboxyphenyl) benzene, fumaric acid, terephthalic acid, and maleic acid.

According to such a configuration, a polymer structure is formed having pore structures therein which prevents or delays the permeance of a component lowering the durability of the coating film, therefore, it is possible to obtain a lining film with excellent durability. In addition, it is possible to prepare the formulation amount of organic ligands and obtain porous coordination polymer (PCP) / metal-organic framework (MOF) with various polymer structures.

In one embodiment of the present invention, the powder paint compositions for baking are provided with a gas absorption feature due to the porous coordination polymer (PCP) / metal-organic framework (MOF).

The gas may be corrosive gas comprising at least hydrogen chloride.

As fluororesin has permeability to gases, the base material of a fluororesin lining film was not corrosion-resistant sufficiently, when it reacted with the permeating gases. As porous coordination polymer (PCP) / metal-organic framework (MOF) adsorbs gases, it can reduce the gas permeability of the fluororesin lining film and improve the corrosion resistance.

Fluororesin could produce failures in adhesion of a coating film because of the permeating corrosive gases, however, due to the porous coordination polymer (PCP) / metal-organic framework (MOF) absorbing the gases, it is possible to provide powder paint compositions for baking which can form a lining film with excellent durability, chemical resistance, permeability resistance, and corrosion resistance.

Preferably, the porous coordination polymer (PCP) / metal-organic framework (MOF) has fine pores with the opening area of a pore being 0.15 nm² - 7.00 nm².

In case the opening area of a pore is smaller than 0.15 nm², it is not possible to absorb gas molecules with high molecular weight. In case the opening area of a pore is larger than 7.00 nm², the gas absorption feature declines due to a lowered effect of capillary condensation.

Preferably, the porous coordination polymer (PCP) / metal-organic framework (MOF) has the specific surface area (BET specific surface area) larger than 900.00 m³/g.

With the specific surface area (BET specific surface area) larger than 900.00 m³/g, the amount of absorbed gas increases, resulting in better durability, chemical resistance, permeability resistance, and corrosion resistance.

In one embodiment of the present invention, powder paint compositions for baking is provided comprising fluororesin comprising one or more types of hydrophobic porous coordination polymer (PCP) / metal-organic framework (MOF) and one or more types of hydrophilic porous coordination polymer (PCP) / metal-organic framework (MOF).

Substances absorbable by the porous coordination polymer (PCP) / metal-organic framework (MOF) differ depending on the properties thereof. By comprising both the hydrophobic porous coordination polymer (PCP) / metal-organic framework (MOF) and the hydrophilic porous coordination polymer (PCP) / metal-organic framework (MOF), the powder paint compositions for baking can absorb more types of substances, resulting in better durability, chemical resistance, permeability resistance, and corrosion resistance.

Preferably, the formulation amount of the fluororesin is 75.00 wt% - 90.00 wt% with respect to the entire powder paint compositions for baking.

With the formulation amount of the fluororesin at 75.00 wt% - 90.00 wt%, it is possible to provide powder paint compositions for baking, capable of forming a lining film having high adhesion force, comprising sufficient amount of porous coordination polymer (PCP) / metal-organic framework (MOF), and having excellent durability, chemical resistance, permeability resistance, and corrosion resistance.

Preferably, the fluororesin comprises one or more types of fluororesins selected from a group consisting of PFA, FEP, ETFE, PCTFE, and ECTFE.

According to such a configuration, it is possible to obtain powder paint compositions for baking which provide a lining film with excellent durability.

It is also possible to further comprise one or more types of additives selected from a group consisting of PPS, PEEK, and PES.

According to such a configuration, it is possible to obtain a lining film with excellent durability.

In one embodiment of the present invention, liquid paint compositions for baking are provided, where the powder paint compositions for baking as described above disperse in a solvent.

According to such a configuration, as the powder paint compositions for baking disperse in a solvent, it is possible to paint a base material that is difficult to paint with the powder paint compositions.

The coating film of the present invention is a coating film comprising the powder paint compositions for baking or the liquid paint compositions for baking, comprising the fluororesin, as described above.

According to such a configuration, as the fluororesin as described above is comprised, it is possible to obtain a lining film with excellent durability, chemical resistance, permeability resistance, and corrosion resistance.

In one embodiment of the present invention, the coating film has the thickness of 40 µm - 5000 µm.

In case the coating film thickness is insufficient, it is not possible to attain durability, chemical resistance, permeability resistance, or corrosion resistance. In case the coating film thickness is excessive, the smoothness may be lost due to bubbles in the coating film, and cracks and roughness on the coating film surface.

The coated object in one embodiment of the present invention is a coated object having a base material, a primer layer formed over the base material, and a single-layered or multiple-layered fluororesin coating film layer formed over the primer layer, wherein the fluororesin coating film layer is a coating film as described above.

According to such a configuration, as the fluororesin as described above is comprised, it is possible to obtain a coated object with excellent durability, chemical resistance, permeability resistance, and corrosion resistance.

### [Effect of the Invention]

According to the powder paint compositions and the liquid paint compositions for baking comprising fluororesin, and a coating film and coated objects comprising such powder paint compositions or liquid paint compositions for baking of the present invention, it is possible to provide powder paint compositions and liquid paint compositions for baking, and a coating film and coated objects comprising such powder paint compositions or liquid paint compositions for baking, which have excellent durability, chemical resistance, permeability resistance and corrosion resistance and form a good lining film free from failures such as cracks.

### [BRIEF DESCRIPTION OF DRAWINGS]

[FIG.1] FIG. 1 shows a cross-section view of the structure of a coated object in an embodiment of the present invention.
[FIG.2] FIG. 2 shows an X-ray diffraction patterns of AP004, AP006, and MOF801(Zr).
[FIG.3] FIG. 3 shows measurement results by Thermogravimeter-Differential Thermal Analysis (TG-DTA) for AP004, AP006, and MOF801(Zr).
[FIG.4] FIG. 4 shows measurement results by Thermogravimeter-Differential Thermal Analysis (TG-DTA) for MJ-501 and MJ-624.
[FIG.5] FIG. 5 shows what the anti-corrosion test for a coated object of the present invention is like.
[FIG.6] FIG. 6 shows a test example 1 after 4-week immersion in 5% hydrochloric acid at temperature conditions at 99.8 °C.
[FIG.7] FIG. 7 shows measurement results for adhesion force of the test example 1 after 4-week immersion in 5% hydrochloric acid under temperature conditions at 99.8 °C.
[FIG.8] FIG. 8 shows a test example 2 after 4-week immersion in 5% hydrochloric acid under temperature conditions at 99.8 °C.
[FIG.9] FIG. 9 shows measurement results for adhesion force of the test example 2 after 4-week immersion in 5% hydrochloric acid under temperature conditions at 99.8 °C.
[FIG. 10] FIG. 10 shows a test example 3 after 4-week immersion in 5% hydrochloric acid under temperature conditions at 99.8 °C.
[FIG. 11] FIG. 11 shows measurement results for adhesion force of the test example 3 after 4-week immersion in 5% hydrochloric acid under temperature conditions at 99.8 °C.
[FIG. 12] FIG. 12 shows a test example 4 after 4-week immersion in 5% hydrochloric acid under temperature conditions at 99.8 °C.
[FIG.13] FIG. 13 shows measurement results for adhesion force of the test example 4 after 4-week immersion in 5% hydrochloric acid under temperature conditions at 99.8 °C.
[FIG. 14] FIG. 14 shows a test example 5 after 4-week immersion in 5% hydrochloric acid under temperature conditions at 99.8 °C.
[FIG. 15] FIG. 15 shows measurement results for adhesion force of the test example 5 after 4-week immersion in 5% hydrochloric acid under temperature conditions at 99.8 °C.
[FIG. 16] FIG. 16 shows a comparative example 1 after 4-week immersion in 5% hydrochloric acid under temperature conditions at 99.8 °C.
[FIG. 17] FIG. 17 shows measurement results for adhesion force of the comparative example 1 after 4-week immersion in 5% hydrochloric acid under temperature conditions at 99.8 °C.
[FIG. 18] FIG. 18 shows a comparative example 2 after 4-week immersion in 5% hydrochloric acid under temperature conditions at 99.8 °C.
[FIG. 19] FIG. 19 shows measurement results for adhesion force of the comparative example 2 after 4-week immersion in 5% hydrochloric acid under temperature conditions at 99.8 °C.
[FIG.20] FIG. 20 shows a test example 1 after 4-week immersion in 35 % hydrochloric acid under temperature conditions at 80 °C.
[FIG.21] FIG. 21 shows measurement results for adhesion force of the test example 1 after 4-week immersion in 35 % hydrochloric acid under temperature conditions at 80 °C.
[FIG.22] FIG. 22 shows a test example 2 after 4-week immersion in 35 % hydrochloric acid under temperature conditions at 80 °C.
[FIG.23] FIG. 23 shows measurement results for adhesion force of the test example 2 after 4-week immersion in 35 % hydrochloric acid under temperature conditions at 80 °C.
[FIG.24] FIG. 24 shows a test example 3 after 4-week immersion in 35 % hydrochloric acid under temperature conditions at 80 °C.
[FIG.25] FIG. 25 shows measurement results for adhesion force of the test example 3 after 4-week immersion in 35 % hydrochloric acid under temperature conditions at 80 °C.
[FIG.26] FIG. 26 shows a comparative example 1 after 4-week immersion in 35 % hydrochloric acid under temperature conditions at 80 °C.
[FIG.27] FIG. 27 shows measurement results for adhesion force of the comparative example 1 after 4-week immersion in 35 % hydrochloric acid under temperature conditions at 80 °C.
[FIG.28] FIG. 28 shows a comparative example 3 with cracks on the surface.
[FIG.29] FIG. 29 is a partially enlarged view of FIG. 28, showing the surface of the comparative example 3.

### [Detailed Description of the Invention]

Porous coordination polymer (PCP) is a material based on the complex chemistry, which has porous structures formed by coordinate bonds of central metals and organic ligands. Porous coordination polymer (PCP) has three-dimensional crystalline polymer structures with gaps (pores) inside, due to continuous, coordinate bonds of central metals and organic ligands.

Porous coordination polymer (PCP) is also called metal-organic framework (MOF). These compound groups have some another names, such as porous metal complex, however, the notation "porous coordination polymer (PCP) / metal-organic framework (MOF)" is consistently used herein. Therefore, the invention of the present application should not be understood that it does not intend compounds groups which are otherwise noted, such as porous metal complex.

In addition, a description merely stating "paint compositions" herein refers to powder paint compositions for baking and liquid paint compositions for baking comprising fluororesin of the present invention.

The term "coating film" herein refers to a single-layered or multiple-layered fluororesin lining film comprising at least one coating film layer where the paint compositions of the present invention are made into coating film. In other words, the term "coating film" herein comprises a multiple-layered fluororesin lining film having at least a single-layered coating film layer where the paint compositions of the present invention are made into coating film as well as another coating film layer where generic paint compositions are made into coating film.

The term "coated object" herein refers to what is structured in layers, comprising a base material, a primer layer over the base material, and a coating film over the primer layer.

Furthermore, it is to be interpreted that the coated object of the present invention also has the effects and the features of the coating film of the present invention.

Hereinafter, embodiments of the paint compositions, and the coating film and the coated objects thereof of the present invention are explained.

### <Paint compositions>

Paint compositions comprising fluororesin in the present embodiment is paint compositions comprising fluororesin where porous coordination polymer (PCP) / metal-organic framework (MOF) formed by coordinate bonds between organic ligands and central metals disperses. Now the paint compositions comprise one or more types of porous coordination polymer (PCP) / metal-organic framework (MOF).

Porous coordination polymer (PCP) / metal-organic framework (MOF) has a polymer structure with pore structures, and as this prevents or delays the permeance of a component lowering the durability of the coating film, it is deemed possible to provide a coating film with excellent durability.

The components lowering the durability of the coating film are liquids and/or gases. Therefore, the paint compositions may be provided with a liquid and/or gas absorption feature by porous coordination polymer (PCP) / metal-organic framework (MOF).

Gases to be absorbed include, but not limited to, organic acids such as hydrogen sulfide, sulfurous acid, nitrous acid, chlorine, hydrogen bromide, hydrogen chloride, acetic acid, and acrylic acid, and alkaline gases such as amine and ammonia.

As fluororesin has gas permeability, the coated base material may react with a gas, causing corrosion. As porous coordination polymer (PCP) / metal-organic framework (MOF) adsorbs gases, it is possible to reduce gas permeability of the coating film, and contain a drop of the coating film adhesion and corrosion of the base material.

Porous coordination polymer (PCP) / metal-organic framework (MOF) is in a powder form, so that porous coordination polymer (PCP) / metal-organic framework (MOF) disperses evenly in fluororesin. In order to be configured as such, porous coordination polymer (PCP) / metal-organic framework (MOF) are preferably mixed with fluororesin with the use of a ball mill and the like.

The formulation amount of porous coordination polymer (PCP) / metal-organic framework (MOF) of the paint compositions in the present embodiment is 0.02 wt% - 20.00 wt% with respect to the entire paint compositions. More preferably, the formulation amount of porous coordination polymer (PCP) / metal-organic framework (MOF) is 0.04 wt% or more with respect to the entire paint compositions. More preferably again, the formulation amount of porous coordination polymer (PCP) / metal-organic framework (MOF) is 19.00 wt% or less with respect to the entire paint compositions. In case the formulation amount of porous coordination polymer (PCP) / metal-organic framework (MOF) is insufficient, it is not possible to attain desired sufficient durability, chemical resistance, corrosion resistance, or the like. In addition, excessive formulation amount fails to form a coating film over the base material.

Porous coordination polymer (PCP) / metal-organic framework (MOF) formulated in the paint compositions in the present embodiment has the 5% decomposition temperature from 200 °C under the condition in ambient air measured by Thermogravimeter-Differential Thermal Analysis (TG-DTA) higher than the melting point of the main compound, i.e., fluororesin.

With porous coordination polymer (PCP) / metal-organic framework (MOF) having such properties, it is possible for the coating film to attain excellent durability, chemical resistance, permeability resistance, and corrosion resistance, as the porous coordination polymer (PCP) / metal-organic framework (MOF) will not decomposed when the paint compositions are baked and form a coating film. Also, even under the operating condition subjected to high temperatures, the coating film would not lose durability, chemical resistance, permeability resistance, or corrosion resistance.

The central metals of porous coordination polymer (PCP) / metal-organic framework (MOF) may comprise metal ions, such as, Li, Be, Mg, Al, Ca, Sc, Ti, Mn, Fe, Co, Ni, Cu, Zn, Sr, Y, Zr, Mo, Ru, Rh, Pd, Pb, In, W, Re, Pt, or lanthanoids. In addition, it is possible to comprise only one type or more than one type of the metal ions.

The structure of porous coordination polymer (PCP) / metal-organic framework (MOF) changes depending on the type of the metals and/or the valence of the metal ions, leading to changes in chemical properties, such as, durability, chemical resistance, corrosion resistance, and heat resistance too. Therefore, it is possible to adjust durability, chemical resistance, corrosion resistance, and heat resistance, depending on the usage of it.

Preferably, in view of attaining better durability, chemical resistance, corrosion resistance and heat resistance, the central metals comprise one or more types of metal ions selected from a group consisting of Al³⁺, Co³⁺, Co²⁺, Ni²⁺, Ni⁺, Cu²⁺, Cu⁺, Zn²⁺, Fe³⁺, Fe²⁺, Ti³⁺, and Zr⁴⁺.

At least one of the central metals carries one or more anions, and the central metals may be present in the porous coordination polymer (PCP) / metal-organic framework (MOF) by coordinately binding to the organic ligands.

In case a carboxylic acid is used as a ligand, for example, it is deprotonated and coordinated with metals in the form of -CO₂⁻, therefore, the metal ion of the central metal and the ligand become neutral by themselves on the whole, forming pores inside. On the other hand, as the ligand which is coordinated with a metal cation in neutral state like 4,4'-bipyridyl, maintains electroneutrality after formation of porous coordination polymer (PCP) / metal-organic framework (MOF), which charges the skeletal frames thereof positive, allowing the anions to enter inside to compensate the charge.

The anions may comprise anions such as F⁻, Cl⁻, Br⁻, I⁻, H⁻, O²⁻, O₂²⁻, S²⁻, N₃⁻, CN⁻, OH⁻, HCO₃⁻, CH₃COO⁻, H(COO)₂⁻, (COO)₂²⁻, CO₃²⁻, HS⁻, HSO₄⁻, SO₄²⁻, SO₃²⁻, S₂O₃²⁻, SCN⁻, NCS⁻, NO₃⁻, NO₂⁻, ONO⁻, ClO⁻, ClO₂⁻, ClO₃⁻, ClO₄⁻, H₂PO₄⁻, and HPO₄²⁻. In addition, it is possible to comprise only one type or more than one type of the anions.

Preferably, in view of attaining better durability, chemical resistance, corrosion resistance and heat resistance, the anion comprises one or more types of anions selected from a group consisting of OH⁻, CO₃²⁻, and O²⁻.

In addition, preferably, at least one central metal together with the anions forms oxo structures. The oxo structures interact with chemicals, and thus, it is possible to obtain paint compositions which provide a coating film with better corrosion resistance and chemical resistance.

Organic ligands may comprise organic ligands, such as, 1,4-benzenedicarboxylic acid, 1,3,5-benzene tricarboxylic acid, 4,4'-bipyridyl, imidazole, 1,3,5-tris(4-carboxyphenyl) benzene, fumaric acid, maleic acid, 5-cyano-1,3-benzenedicarboxylic acid, 9,10-anthracene dicarboxylic acid, 2,2'-diamino-4,4'-stilbene dicarboxylic acid, 2,5-diaminoterephthalic acid, 2,2'-dinitro 4,4'-stilbene dicarboxylic acid, 2,5-dihydroxyterephthalic acid, 3,3',5,5'-tetracarboxydiphenylmethane, 1,2,4,5-tetrakis(4-carboxyphenyl) benzene, terephthalic acid, 4,4',4'-s-triazine 2,4,6-triyl-3 benzoic acid, 1,3,5-tris(4'-carboxy[1,1'-biphenyl]-4-yl) benzene, trimesic acid, 2,6-naphthalene dicarboxylic acid, 2-hydroxyterephthalic acid, biphenyl 3,3',5,5'-tetracarboxylic acid, biphenyl 3,4',5-tricarboxylic acid, 5-bromoisophthalic acid, malonic acid, 2-methylimidazole, 5-cyano 1,3-benzenedicarboxylic acid, 2-aminoterephthalic acid, 1,2-di(4-pyridyl) ethylene, 4,4'-ethylene dipyridine, 2,3-pyrazine dicarboxylic acid, 1,4-diaza bicyclo [2.2.2] octane, 3,5-pyridinedicarboxylic acid, trans, trans-muconic acid, 5-nitroisophthalic acid, 5-methylisophthalic acid, 2-hydroxyterephthalic acid, 4,4'-biphenyl dicarboxylic acid, and trimesic acid. In addition, it is possible to comprise only one type or more than one type of the organic ligands.

In addition, in view of attaining better durability, chemical resistance, corrosion resistance and heat resistance, it is preferable that the organic ligands comprise one or more types of organic ligands selected from a group comprising of 1,4-benzenedicarboxylic acid, 1,3,5-benzene tricarboxylic acid, 4,4'-bipyridyl, imidazole, 1,3,5-tris(4-carboxyphenyl) benzene, fumaric acid, terephthalic acid, and maleic acid.

It is preferable that porous coordination polymer (PCP) / metal-organic framework (MOF) has fine pores with the opening area or a pore being 0.15 nm² - 7.00 nm².

In case the opening area of a pore is smaller than 0.15 nm², it is not possible to absorb gas molecules with high molecular weight. In case the opening area of a pore is larger than 7.00 nm², the gas absorption feature declines due to a lowered effect of capillary condensation.

Preferably, porous coordination polymer (PCP) / metal-organic framework (MOF) has the specific surface area (BET specific surface area) larger than 900.00 m³/g.

With the specific surface area (BET specific surface area) larger than 900.00 m³/g, the amount of absorbed gas increases, resulting in better durability, chemical resistance, permeability resistance, and corrosion resistance.

Porous coordination polymer (PCP) / metal-organic framework (MOF) has properties coming from the central metals and the organic ligands which constitute the porous coordination polymer (PCP) / metal-organic framework (MOF). For example, thermal conductivity and dielectric property etc. vary depending on the central metals. Hydrophobic / hydrophilic properties vary depending on the organic ligands. Therefore, central metals and organic ligands are selectable depending on the environments where the coating film or the coated object is applied.

Plural types of porous coordination polymer (PCP) / metal-organic framework (MOF) maybe formulated in paint compositions. As described above, properties of porous coordination polymer (PCP) / metal-organic framework (MOF) depend on the central metals and organic ligands. Formulating several types of porous coordination polymer (PCP) / metal-organic framework (MOF) of different properties enables the paint compositions and the coating film to have various properties.

An example of formulating several types of porous coordination polymer (PCP) / metal-organic framework (MOF) includes paint compositions comprising one or more types of hydrophobic porous coordination polymer (PCP) / metal-organic framework (MOF), and one or more types of hydrophilic porous coordination polymer (PCP) / metal-organic framework (MOF).

Comprising both the hydrophobic porous coordination polymer (PCP) / metal-organic framework (MOF) and the hydrophilic porous coordination polymer (PCP) / metal-organic framework (MOF) enables more types of absorbable substances to be available for absorption, resulting in better durability, chemical resistance, permeability resistance, and corrosion resistance.

The fluororesin comprised in paint compositions in the present embodiment is thermoplastic, and insoluble in both polar solvents and nonpolar solvents.

An example of polar solvents includes water, formic acid, acetic acid, methanol, ethanol, propanol, isopropanol, n-butanol, acetone, ethyl acetate and the like. An example of nonpolar solvents includes benzene, toluene, hexane, diethyl ether, dichloromethane, and the like.

As the fluororesin of the present invention is insoluble in both polar solvents and nonpolar solvents, it is possible to provide paint compositions which can form a coating film with excellent chemical resistance and solvent resistance.

The formulation amount of fluororesin with respect to the entire paint compositions is 70.00 wt% - 99.98 wt%. Preferably, it is 73.00 wt% - 96.00 wt%. More preferably, it is 75.00 wt% - 90.00 wt%.

In case the formulation amount of fluororesin is less than 70.00 wt%, a failure occurs, such as cracks, upon formation of the coating film. In addition, the upper limit amount of fluororesin enables to comprise sufficient amount of porous coordination polymer (PCP) / metal-organic framework (MOF).

Preferably, the fluororesin comprises one or more types of fluororesin selected from a group consisting of PFA (tetrafluoroethylene par fluoro alkyl vinyl ether copolymer), FEP (tetrafluoroethylene-hexafluoro propylene copolymer), ETFE (tetrafluoroethylene-ethylenic copolymer), PCTFE (polychlorotrifluoroethylene copolymer), and ECTFE (chlorotrifluoroethylene-ethylenic copolymer).

These fluororesins are thermoplastic, and insoluble in both polar solvents and nonpolar solvents. Therefore, with the use of paint compositions comprising one or more of these fluororesins, it is possible to obtain a lining film with excellent durability.

It is possible to further comprise one or more types of additives selected from a group consisting of PPS (polyphenylene sulfide), PEEK (polyetheretherketone), and PES (polyether sulfone).

With the use of paint compositions comprising one or more of these additives, it is possible to obtain a lining film with excellent durability.

Paint compositions are the paint compositions for forming a coating film by baking (baking step).

The paint compositions can be provided in the form of a powder paint. The paint compositions provided in the form of a powder paint are solvent-free. The paint compositions in the form of a powder paint enables easy adjustment of the coating film thickness.

In addition, paint compositions do not necessarily need to be limited to the form of powder paint compositions. In some cases, it may be liquid paint compositions for baking where powder paint compositions are dispersed in a solvent by surfactant and the like.

The solvent may be polar solvents or nonpolar solvents. The solvent, such as but not limited to, water, alcohols (methanol, ethanol, propanol, isopropanol, or n-butanol), ketone (acetone and the like), aromatic compounds (benzene or toluene and the like) can be used.

The particle size of fluororesin, porous coordination polymer (PCP) / metal-organic framework (MOF), and other additives in the form of liquid paint compositions is smaller than that in the form of powder paint compositions. The exemplified particle size includes, but not limited to, around 0.01 µm - 50 µm. Instead of powder paint compositions, a dispersion liquid called dispersion may be used, where particles of around 0.2 µm disperse in a liquid mainly composed of water.

### <Coating film and coated object>

Next, the methods of forming a coating film in the present embodiment as well as a coated object having such a coating film are explained.

A lining film in the present embodiment is formed over a primer layer over a base material, with the use of paint compositions comprising fluororesin as described above.

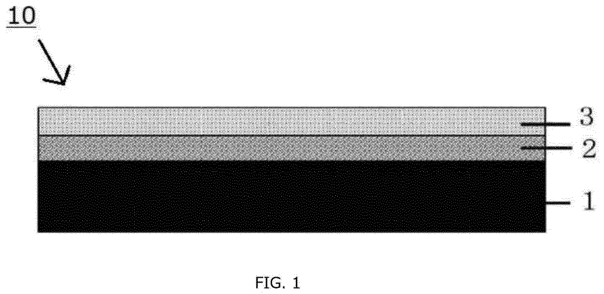

FIG. 1 is a cross-section view of a coated object (10) which forms a coating film (lining film) (3) over a primer layer (2) over a base material (1).

The base material (1) preferably comprises, but not limited to, metals, glasses, ceramics and the like tolerable to high temperatures upon baking, if the baking step is used to form the primer layer (2) and the coating film (3) over the base material (1). Among them, metals are preferable as they are highly corrosion resistant.

In addition, in order to increase adhesion to the primer layer (2), the base material (1) may be given a preliminary surface treatment (blasting, plating, silane coupling, and the like).

The primer layer (2) is formed over the base material (1). Forming the primer layer (2) over the base material (1) improves the adhesion between the base material (1) and the coating film (3). Specifically, raw materials of the primer layer (2) are applied to the base material (1), forming the primer layer (2) by drying and baking as necessary.

The primer layer (2) preferably includes, but not limited to, fluororesin with chromic acid, and fluororesin with organic titanate.

After formation of the primer layer (2), a coating film (3) is formed over the primer layer (2), with the use of the paint compositions in the present embodiment.

It is also possible to use the paint compositions in the present embodiment entirely, or to use it in one part of the layers and generic paint compositions in other layers. The ratio of the coating film thickness of the present embodiment is favorably, but not limited to, 5% - 100% with respect to the entire coating film thickness.

Applying the paint compositions in the present embodiment or generic paint compositions on the primer layer (2) by electrostatic powder coating followed by repeated baking forms a single-layered or multiple-layered coating film (3).

The coating film thickness of the formed coating film is preferably 40 µm - 5000 µm. In case the coating film thickness of the coating film (3) is insufficient, it is not possible to attain durability, chemical resistance, permeability resistance, and corrosion resistance. In case the coating film thickness of the coating film (3) is excessive, the smoothness may be lost due to bubbles in the coating film, and cracks and roughness on the coating film surface.

In addition, as the mixing conditions dominate the resultant mixture, it is preferable that the paint compositions are sufficiently mixed in a ball mill and the like, in order to prevent uneven distribution or local concentration of porous coordination polymer (PCP) / metal-organic framework (MOF). It is preferable to produce a masterbatch with highly concentrated distribution, and then mix it by the Henschel mixer and the like until a suitable concentration is reached.

In addition, the exemplified baking conditions for the primer layer (2) and the coating film (3) include, but not particularly limited to, 5 to 180 minutes at the temperature of 300 °C - 450 °C. Baking may be performed with the use of an electric oven, for example.

Through these steps, it is possible to obtain a coated object (10) having a fluororesin coating film layer consisting of a base material (1), a primer layer (2) formed over the base material (1), and a single-layered or multiple-layered coating film (3) formed over the primer layer (2).

### [Examples]

Hereinafter, the effect of the present invention is clarified by illustrating the Examples which evaluate the paint compositions, the coating film and the coated object thereof of the present invention.

The present invention, however, should not be construed to be limited to the aspects illustrated in the below Examples.

In the following Examples, as porous coordination polymer (PCP) / metal-organic framework (MOF), AP004 (Atomis, Inc.) having the same structure as MIL-100(Fe), AP006 (Atomis, Inc.) having the same structure as Al(OH)(fumarate), and MOF801(Zr) (GS Alliance Co.,Ltd.) having the same structure as Zr₆O₄(OH)₄(fumarate) were used. The ligand of AP004 is 1,3,5-benzene tricarboxylic acid, the ligand of AP006 is fumaric acid, and the ligand of MOF801(Zr) is fumaric acid.

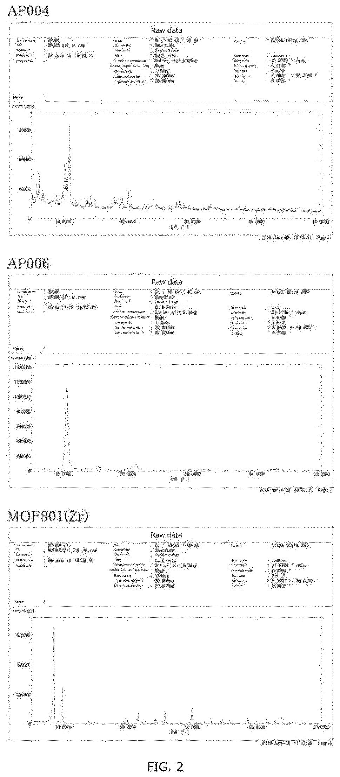

FIG. 2 shows X-ray diffraction patterns of AP004, AP006, and MOF801(Zr).

### <Example 1> Thermogravimeter-Differential Thermal Analysis for porous coordination polymer (PCP) / metal-organic framework (MOF) and fluororesin

The Thermogravimeter-Differential Thermal Analysis (TG-DTA) was given to the porous coordination polymer (PCP) / metal-organic framework (MOF) and the fluororesin used in the Examples.

The porous coordination polymer (PCP) / metal-organic framework (MOF) and the fluororesin given the Thermogravimeter-Differential Thermal Analysis (TG-DTA) are as follows.

### - Porous coordination polymer (PCP) / metal-organic framework (MOF)

(a-i) AP004 (PCP/MOF MIL-100(Fe) Fc₃(O)(OH)(C₉H₃O₆)₂ from Atomis Inc., pore diameter: 2.4- 2.9 nm, opening area of a pore: 4.52 nm² - 6.60 nm², BET specific surface area: 1700 - 2000 m³/g)
(a-ii) AP006 (PCP/MOF Al(OH)(fumarate) = Al(OH)(C₄H₂O₄) from Atomis Inc., 0.57 nm x 0.60 nm rhombic shaped pore, opening-area of a pore: 0.17 nm², BET specific surface area: 900 - 2000 m3/g)
(a-iii) MOF801(Zr) (PCP/MOF Zr₆O₄(OH)₄(fumarate) = Zr₆O₄(OH)₄(C₄H₂O₄)₆ from GS Alliance Co.,Ltd.)

### - Fluororesin

(b-i) MJ-501 (PFA powder paint from Chemours-Mitsui Fluoroproducts Co., Ltd., comprising 85% PFA, 10% glass flakes, and 5% PPS)
(b-ii) MJ-624 (PFA powder paint from Chemours-Mitsui Fluoroproducts Co., Ltd., comprising 85% PFA, and 15% SiC fillers)

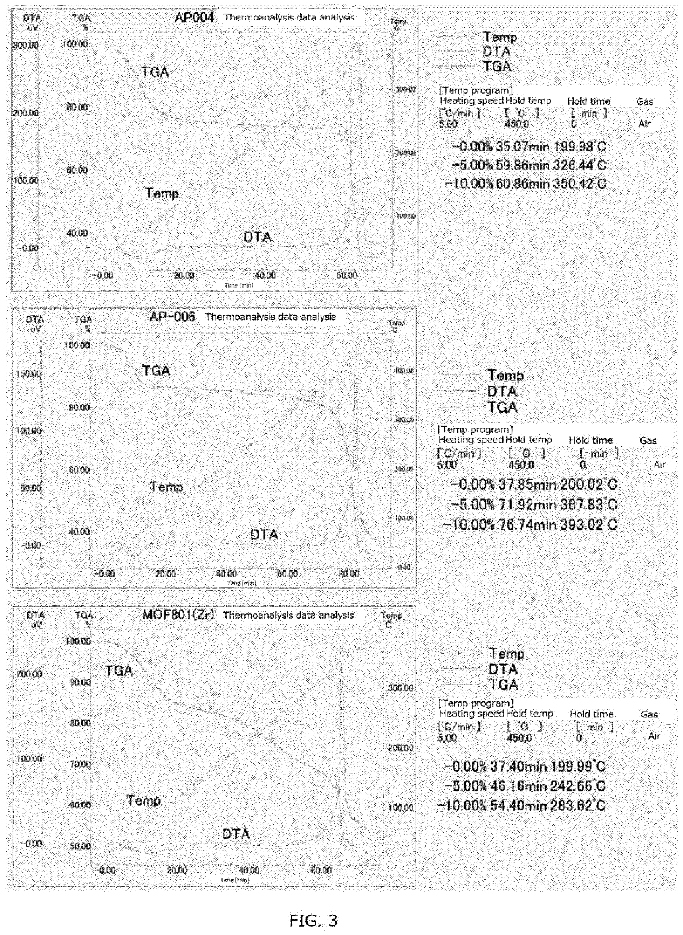

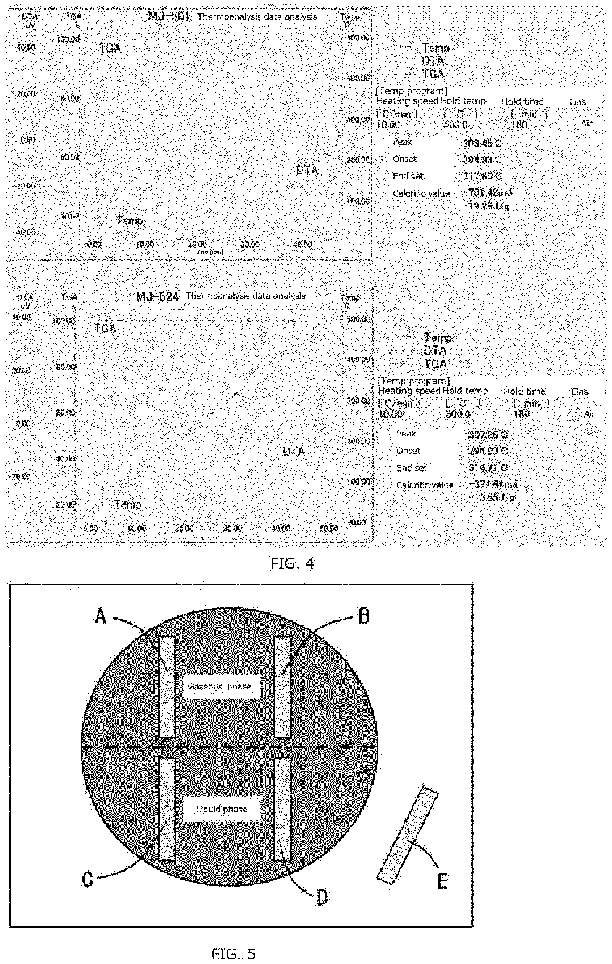

The Thermogravimeter-Differential Thermal Analysis (TG-DTA) results of AP004, AP006, and MOF801(Zr) are shown in FIG. 3. In addition, the Thermogravimeter-Differential Thermal Analysis (TG-DTA) results of MJ-501 and MJ-624 are shown in FIG. 4.

As shown in FIG. 3, 5% decomposition temperatures of AP004, AP006, and MOF801(Zr) from about 200 °C in ambient air were 326.44 °C, 367.83 °C, and 242.66 °C, respectively.

In addition, as shown in FIG. 4, the peak of the melting temperature was found at 308.45 °C for MJ-501 and at 307.26 °C for MJ-624.

Therefore, the 5% decomposition temperatures of AP004 and AP006 from 200 °C were found to be higher than the melting temperatures of MJ-501 and MJ-624. On the other hand, the 5% decomposition temperature of MOF801(Zr) from 200 °C was lower than the melting temperatures of MJ-501 and MJ-624.

### <Example 2> Formulation of paint compositions

According to Table 1, Table 2, and Table 3, the formulation examples and the comparative formulation examples were prepared as powder paint compositions. Here, (a-i), (a-ii), (a-iii), (b-i), and (b-ii) of Table 1, Table 2, and Table 3 are the same as the porous coordination polymer (PCP) / metal-organic framework (MOF) and the fluororesin given the Thermogravimeter-Differential Thermal Analysis (TG-DTA) in Example 1. In addition, both (b-i) MJ-501 and (b-ii) MJ-624 are thermoplastic, and insoluble in both polar solvents and nonpolar solvents.

### (Formulation examples)

Paint compositions of the formulation examples are prepared, according to Table 1 and Table 2.

The formulation example 1 was prepared according to the formulation amounts shown in Table 1. The formulation example 1 was obtained by formulating (a-i) and (b-i) in Table 1, mixing them in a ball mill for two days, and filtering them by a screen with 300 µm pores.

The formulation example 2 and the formulation example 3 were obtained by mixing the formulation example 1 and MJ-501 by a mixer for 2 minutes, according to the formulation amounts shown in Table 1 respectively.

The formulation example 4 was prepared according to the formulation amounts shown in Table 2. The formulation example 4 was obtained by formulating (a-ii), (b-ii), and (c-i) in Table 1, mixing them in a ball mill for two days, and filtering them by a screen with 300 µm pores.

The formulation example 5 was obtained by mixing the formulation example 4, (b-ii) MJ-624, and (c-i) by a mixer for 2 minutes, according to the formulation amounts shown in Table 2.

The formulation example 6 was prepared according to the formulation amounts shown in Table 2. The formulation example 6 was obtained by formulating (a-iii) and (b-i) in Table 1, mixing them in a ball mill for two days, and filtering them by a screen with 300 µm pores.

The formulation example 7 was obtained by mixing the formulation example 6 and MJ-501 by a mixer for 2 minutes, according to the formulation amounts shown in Table 2.

(c-i) in Table 1 and Table 2 represents Ryton V-1 (Chevron Phillips Chemical Company, LLC), which is PPS (polyphenylene sulfide).

(A) and (B) in Table 1 and Table 2 represent the formulation amounts of porous coordination polymer (PCP) / metal-organic framework (MOF) and the formulation amounts of fluororesin, respectively, in the paint compositions.

### (Comparative formulation examples)

Paint compositions of the comparative formulation examples are prepared, according to Table 3.

(b-i) was used as it was as the comparative formulation example 1, as shown in Table 3.

The comparative formulation example 2 was prepared according to the formulation amounts shown in Table 3. The comparative formulation example 2 was obtained by formulating (b-ii) and (c-i) in Table 3 and mixing them by a mixer for 2 minutes.

The comparative formulation example 3 was prepared according to the formulation amounts shown in Table 3. The comparative formulation example 3 was obtained by formulating (a-i) and (b-i) in Table 3, mixing them in a ball mill for two days, and filtering them by a screen with 300 µm pores.

(c-i) in Table 3 represents Ryton V-1 (Chevron Phillips Chemical Company, LLC), which is PPS (polyphenylene sulfide).

(A) and (B) in Table 3 represent the formulation amounts of porous coordination polymer (PCP) / metal-organic framework (MOF) and the formulation amounts of fluororesin, respectively, in the paint compositions of the comparative formulation examples.

**[Table 1]**

| Formulation amounts (wt%) | Formulation example | For mulation example 2 | Formulation example 3 |
|---|---|---|---|
| (a-i) AP004 | 5.00 | - | - |
| (a-ii)AP006 | - | - | - |
| (a-iii)MOF801(Zr) | - | - | - |
| (b-i)MJ-501 | 95.00 | 80.00 | 98.00 |
| (b-ii)MJ-624 | - | - | - |
| (c-i) Ryton V-1 | - | - | - |
| (d-i) Formulation example 1 | - | 20.00 | 2.00 |
| (d-ii) Formulation example 4 | - | - | - |
| (d-iii) Formulation example 6 | - | - | - |
| (A) PCP/MOF contents | 5.00 | 1.00 | 0.10 |
| (B) Fluororesin | 80.75 | 84. 15 | 84.92 |

**[Table 2]**

| Formulation amounts (wt%) | Formulation example 4 | Formulation example 5 | Formulation example 6 | Formulation example 7 |
|---|---|---|---|---|
| (a-i) AP004 | - | - | - | - |
| (a-ii) AP006 | 5.00 | - | - | - |
| (a-iii)MOF801(Zr) | - | - | 5.00 | - |
| (b-i)MJ-501 | - | - | 95.00 | 98.00 |
| (b-ii)MJ-624 | 90.25 | 76.00 | - | - |
| (c-i) Ryton V-1 | 4.75 | 4.00 | - | - |
| (d-i) Formulation example 1 | - | - | - | - |
| (d-ii) Formulation example 4 | - | 20.00 | - | - |
| (d-iii) Formulation example 6 | - | - | - | 2.00 |
| (A) PCP/MOF contents | 5.00 | 1.00 | 5.00 | 0.10 |
| (B) Fluororesin | 76. 71 | 79. 94 | 80.75 | 84.92 |

**[Table 3]**

| Formulation amounts (wt%) | Comparative formulation example 1 | Comparative formulation example 2 | Comparative formulation example 3 |
|---|---|---|---|
| (a-i) AP004 | - | - | 20.00 |
| (b-1) MJ-501 | 100.00 | - | 80.00 |
| (b-ii)MJ-624 | - | 95.00 | - |
| (c-i) Ryton V-1 | - | 5.00 | - |
| (A) PCP/MOF contents | 0.00 | 0.00 | 20.00 |
| (B) Fluororesin | 85.00 | 80.75 | 68.00 |

### <Example 3> Formation of a coated object

In order to form a coated object having a coating film with the formulation example in Example 1 and the comparative formulation example respectively, first, the base material was treated by blasting to form a primer layer. SUS304 (6 mm thickness, 200 mm squared) was used as a base material.

The primer layer was formed by mixing (I) and (II) below at 3:1 in ratio by weight, and baking them at 400 °C for 60 minutes.
(I) 850-G314 (PTFE-containing primer solution from The Chemours Company)
(II) 850-G7799 (Chromic acid-containing primer solution from The Chemours Company)

Hereinafter, the coating film (lining film layer) in Example 3 is explained in more detail.

As shown in Table 4 below with the formulation examples of 1-3, 5, or 7, coated objects were formed, each of which has a coating film of test examples 1-5 respectively on the primer layer. In addition, as shown in Table 5 with the comparative formulation examples 1-3, coated objects were formed, each of which has a coating film of comparative examples 1-3 respectively. Each coated object of the test examples 1-5 and the comparative examples 1-3 has a 400 µm coating film thickness on the entire coating film, due to the repeated steps of applying the paint compositions of the formulation examples or the comparative formulation examples by the electrostatic powder painting method followed by baking at 350 °C for 60 minutes.

**[Table 4]**

| | Test example 1 | Test example 2 | Test example 3 | Test example 4 | Test example 5 |
|---|---|---|---|---|---|
| Lower layer | Comparative formulation example 1 | Comparative formulation example 1 | Formulation example 3 | Comparative formulation example 2 | Formulation example 7 |
| | 65 *µ*m | 90 *µ*m | 400 *µ*m | 65 *µ*m | 400 *µ*m |
| Middle layer | Formulation example 1 | Formulation example 2 | - | Formulation example 5 | - |
| | 40 *µ*m | 50 *µ*m | | 100 *µ*m | |
| Upper layer | Comparative formulation example 1 | Comparative formulation example 1 | - | Comparative formulation example 2 | - |
| | 295 *µ*m | 260 *µ*m | | 235 *µ*m | |
| Entire coating film thickness | 400 *µ*m | 400 *µ*m | 400 *µ*m | 400 *µ*m | 400 *µ*m |

| | | | | | |
|---|---|---|---|---|---|
| Base material is SUS304, Primer layer is fomulated with 850-G314 and 850-G7799 at 3:1. | | | | | |

**[Table 5]**

| | Comparative example 1 | Comparative example 2 | Comparative example 3 |
|---|---|---|---|
| Lower layer | Comparative formulation example 1 | Comparative formulation example 2 | Comparative formulation example 3 |
| | 400 *µ*m | 400 *µ*m | 400 *µ*m |
| Middle layer | - | - | - |
| Upper layer | - | - | - |
| Entire coating film thickness | 400 *µ*m | 400 *µ*m | 400 *µ*m |
| Note | | | Not possible to form a good coating film due to cracks on the coating film surface. |

| | | | |
|---|---|---|---|
| Base material is SUS304, Primer layer is fomulated with 850-G314 and 850-G7799 at 3:1. | | | |

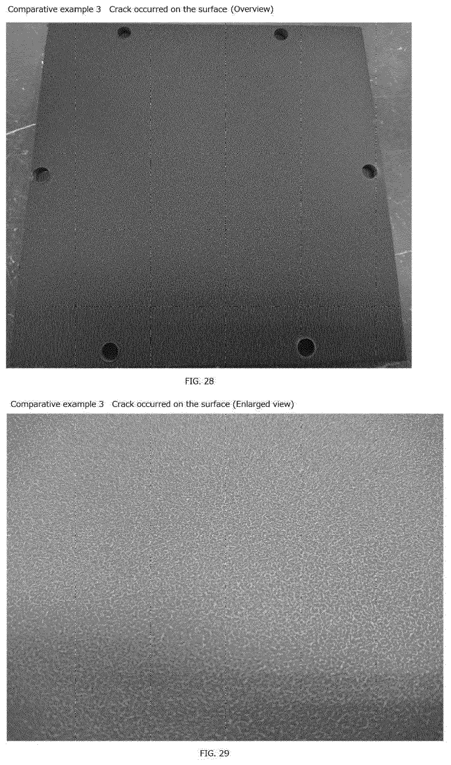

FIG. 28 shows the comparative example 3 with cracks on the surface. FIG. 29 is a partially enlarged view of FIG. 28, showing the surface of the comparative example 3. The coated object of the comparative example 3 contained less formulation amounts of fluororesin, that is 68.00 wt%, with respect to the entire paint compositions, and had lots of cracks on the surface of the coating film as shown in FIG. 28 and 29, failing to form a good coating film.

### <Example 4> Anti-corrosion test

Anti-corrosion test was given to the prepared coated objects of the test examples 1-5 and the comparative examples 1-2 by a lining tester LA-15 (Yamasaki-seiki Laboratory). The comparative example 3 was excluded from the anti-corrosion test, due to the cracks on the surface of the coating film as described in Example 2 above.

The anti-corrosion test was given by the Yamazaki lining tester LA-15, where the lower half of the test examples 1-5 and the comparative examples 1-2 above were immersed in the hydrochloric acid and the upper half of them were subjected to the volatized hydrochloric acid in a sealed state, as shown in FIG. 5.

The test conditions were set as follows: Condition 1: 4 weeks in the 5% hydrochloric acid under the temperature condition at 99.8 °C; and Condition 2: 4 weeks in the 35% hydrochloric acid under the temperature condition at 80 °C. The test examples 1-3 and the comparative example 1 were given the anti-corrosion test under both the conditions 1 and 2. The test examples 4 and 5 and the comparative example 2 were given the anti-corrosion test only under the condition 1.

### (Test items)

Specifically, the 5 items (1) - (5) below were tested under the condition 1 and condition 2.

### (1) Initial adhesion force

The initial adhesion force to the base material was tested by giving the peel strength test specified in JIS K 5400 to the lining film in 5 mm width before being subjected to the hydrochloric acid. The results were evaluated as; ○ for the value equivalent to that of the comparative example 1 or 2; ⊚ for the value higher than that of the comparative example 1 or 2; Δ for the value lower than that of the comparative example 1 or 2; and × for the value lower than half the value of the comparative example 1 or 2. If the coating film got fractured, it was evaluated as ○ irrespective of the value, as it was due to the thick coating film. Tables 6-8 show detailed adhesion force, and the description "coating film fracture" is added for the ones showing fractures on the lining film. The peel strength test was given to the part which was not immersed in the hydrochloric acid as shown in FIG. 5 E, to evaluate the initial adhesion force to the base material.

### (2) Time until blister (bulge) occurrence

The time required until blister occurrence was measured. As the test was stopped and the examples were decomposed to check the coating film every week, blister occurrence was recorded weekly. The results were evaluated as; ○ for the value equivalent to that of the comparative example 1 or 2; ⊚ for the value higher than that of the comparative example 1 or 2; Δ for the value lower than that of the comparative example 1 or 2; and × for the value lower than half the value of the comparative example 1 or 2.

### (3) The maximum diameter of a blister (bulge) after 4 weeks

The maximum diameter of the blister after 4 weeks was measured. The results were evaluated as; ○ for the value equivalent to that of the comparative example 1 or 2; ⊚ for the value lower than that of the comparative example 1 or 2; Δ for the value higher than that of the comparative example 1 or 2; and × for the value higher than twice the value of the comparative example 1 or 2. As the ones under the condition of 35 % hydrochloric acid showed some area of the coating film inflating off the base material, they were excluded from the results records.

### (4) Ratio of the area of a blister (bulge) after 4 weeks

The area of the blister after 4 weeks was measured and the area with the blister occurrence with respect to the tested area was calculated. The results were evaluated as; ○ for the value equivalent to that of the comparative example 1 or 2; ⊚ for the value lower than that of the comparative example 1 or 2; Δ for the value higher than that of the comparative example 1 or 2; and × for the value higher than twice the value of the comparative example 1 or 2. Plurality of blisters mostly concentrating in one location, or the area of the coating film inflating off the base material is collectively counted as one blister area, instead of counting each blister area and adding them up.

### (5) Adhesion force after 4 weeks

The adhesion force to the base material after 4 weeks was tested by the peel strength test specified in JIS K 5400. The results were evaluated as; ○ for the lowest value almost equivalent to that of the comparative example 1 or 2; ⊚ for the lowest value higher than that of the comparative example 1 or 2; Δ for the lowest value obviously lower than that of the comparative example 1 or 2; and × for the value lower than half the value of the comparative example 1 or 2. As the coating film was divided into a gaseous phase portion and a liquid phase portion, the adhesion force after 4 weeks was measured for each, which was then listed in the upper column for the gaseous phase and in the lower column for the liquid phase respectively, in the Tables 6-8. In addition, the measured values (N/5 mm) by the peel strength test are described in Tables 6-8 with additional description "coating film fracture" for the ones showing fractures on the coating film. Moreover, if a portion with adhesion force at 0 was found on the interface between the gaseous phase and the liquid phase, the length was measured in the liquid phase and recorded for comparison. As shown in FIG. 5, the left side and the right side were measured twice for each, and A and B refer to the gaseous phase and C and D refer to the liquid phase. The values of the 2 measurements are all listed in Tables 6-8.

### (Test results)

The test examples 1-3, and 5 and the comparative example 1 were formulated with MJ-501 as fluororesin, as described in Examples 2 and 3 above. On the other hand, the test example 4 and the comparative example 2 were formulated with MJ-624 as fluororesin. Therefore, the respective results, the one result for the test examples 1-3, and 5 and the comparative example 1, and the other result for the test example 4 and the comparative example 2, are shown in separate tables.

The anti-corrosion test results are shown respectively as follows; the one for the test examples 1-3 and 5 and the comparative example 1 under the condition of 5% hydrochloric acid in Table 6, the another one for the test example 4 and the comparative example 2 under the condition of 5% hydrochloric acid in Table 7, and yet another one for the test examples 1-3 and the comparative example 1 under the condition of 35% hydrochloric acid in Table 8.

**[Table 6]**

| Condition 1: 99.8 °C, 5% hydrochloric acid condition | | | Formulated with fluororesin MJ-501 | | |
|---|---|---|---|---|---|
| | Test example 1 | Test example 2 | Test example 3 | Test example 5 | Comparative example 1 |
| Initial adhesion force | >25.0 (Coating film fracture) | >28. 9 (Coating film fracture) | >28. 6 (Coating film fracture) | >27. 4 (Coating film fracture) | >24.3 (Coating film fracture) |
| (N/5mm) | ○ | ○ | ○ | ○ | |
| Time until blister occurrence | 2 | 1 | 1 | 1 | 1 |
| (week) | ⊚ | ○ | ○ | ○ | |
| Maximum blister diameter after 4 weeks | 5 | 6 | 4 | 8 | 7 |
| (mm) | ⊚ | ⊚ | ⊚ | ○∼Δ | |
| Area of blister occurrence after 4 weeks | 67.48 | 46.95 | 31.71 | 60.98 | 72.36 |
| (%) | ⊚ | ⊚ | ⊚ | ⊚ | |
| Adhesion force after 4 weeks (Gaseous phase) | 12.3∼28.2 (Coating film fracture) | 6.8∼23. 6 (Coating film fracture) | 11.9∼28.7 (Coating film fracture) | 6.3∼17.7 | 3.0∼17.2 |
| (N/5mm) | ⊚ | ⊚ | ⊚ | ⊚ | |
| Adhesion force after 4 weeks (Liquid phase) | 7.5∼27.8 | 3.3∼28.3 (Coating film fracture) | 9.8∼28.3 (Coating film fracture) | 3.9∼24.9 | 3.1∼23.3 |
| (N/5mm) | ⊚ | ⊚ | ⊚ | ⊚ | |

**[Table 7]**

| Condition 1: 99.8 °C, 5% hydrochloric acid condition Formulated with fluororesin MJ-624 | | |
|---|---|---|
| | Test example 4 | Comparative example 2 |
| Initial adhesion force | > 17.8 | > 17.5 |
| (N/5mm) | ○ | |
| Time until blister occurrence | 1 | 1 |
| (week) | ○ | ○ |
| Maximum blister diameter after 4 weeks | 3 | 5 |
| (mm) | ⊚ | |
| Area of blister occurrence after 4 weeks | 42.28 | 46.95 |
| (%) | ⊚ | |
| Adhesion force after 4 weeks (Gaseous phase) | > 21.6 | > 24.6 |
| (N/5mm) | ○ | |
| Adhesion force after 4 weeks (Liquid phase) | 9.2∼21.7 (Coating film fracture) | 5.2∼21.8 (Coating film fracture) |
| (N/5mm) | ⊚ | |

**[Table 8]**

| Condition 2: 80 °C, 35% hydrochloric acid condition | | | Formulated with fluororesin MJ-501 | |
|---|---|---|---|---|
| | Test example 1 | Test example 2 | Test example 3 | Comparative example 1 |
| Initial adhesion force | >24.8 (Coating film fracture) | >28. 3 (Coating film fracture) | >27.4 (Coating film fracture) | >22.8 (Coating film fracture) |
| (N/5mm) | ○ | ○ | ○ | |
| Time until blister occurrence | 2 | 2 | 3 | 2 |
| (week) | ○ | ○ | ⊚ | |
| Maximum blister diameter after 4 weeks | 3 | 2 | 1 | 3 |
| (mm) | ○ | ⊚ | ⊚ | |
| Area of blister occurrence after 4 weeks | 63.41 | 21.06 | 14.63 | 68. 29 |
| (%) | ⊚ | ⊚ | ⊚ | |
| Adhesion force after 4 weeks (Gaseous phase) | 0∼19.2 | 0.1∼9.6 | 0.1∼13.3 | 0∼13.6 |
| (N/5mm) | ⊚ | ○∼Δ | ○ | |
| Adhesion force after 4 weeks (Liquid phase) | 0∼23.5 (Adhesion force 0 17mm from gaseous-liquid interface) | 0∼8.4 (No adhesion force 0 on gaseous-liquid Interface) | 0.1∼6.0 (No adhesion force 0 on gaseous-liquid interface) | 0∼10.6 (Adhesion force 0 25mm from gaseous-liquid interface) |
| (N/5mm) | ⊚ | ○ | ○ | |

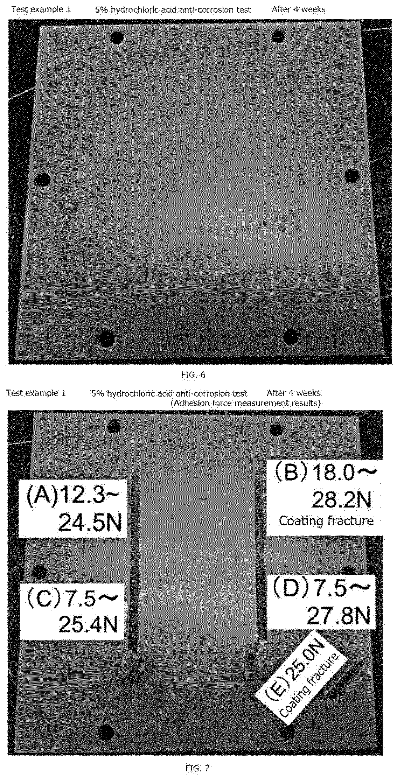

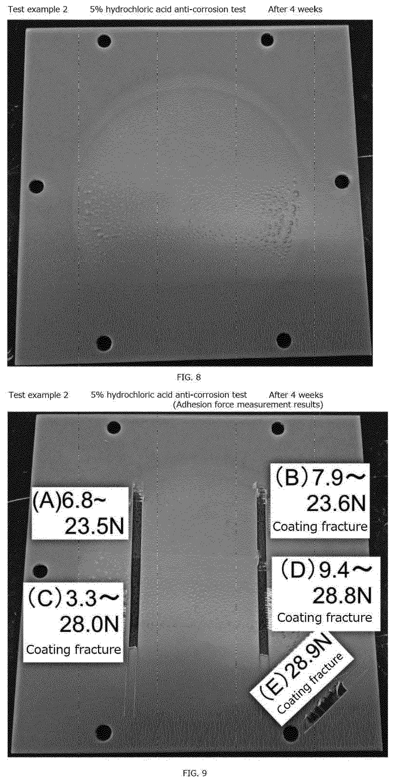

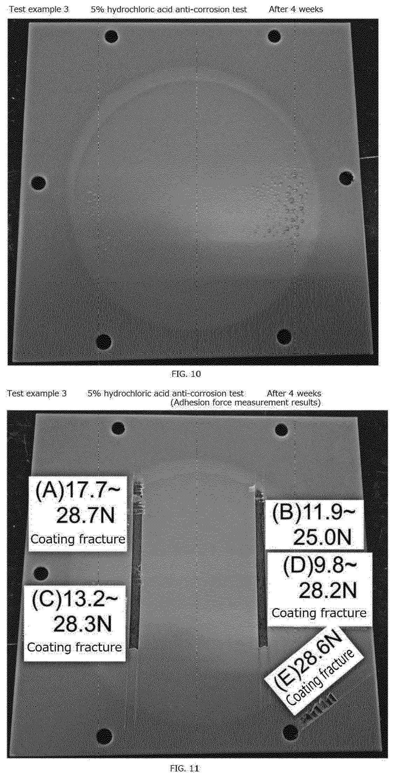

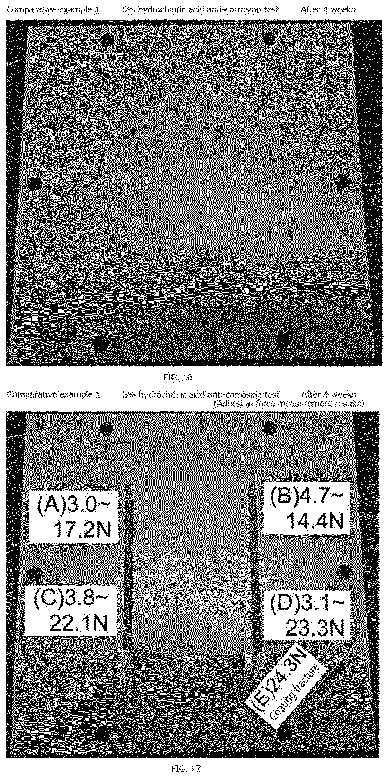

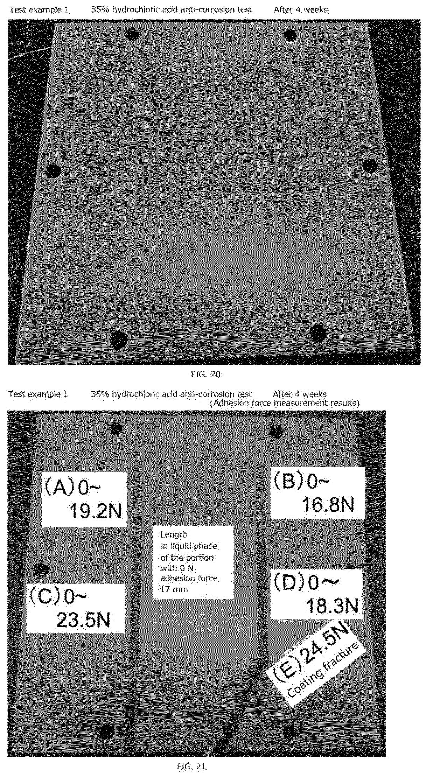

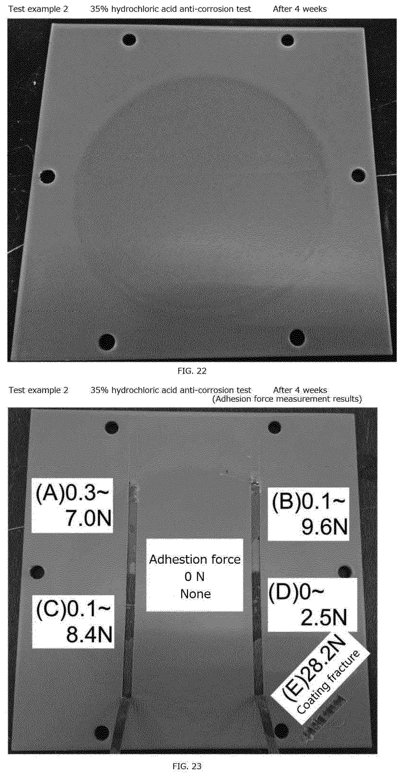

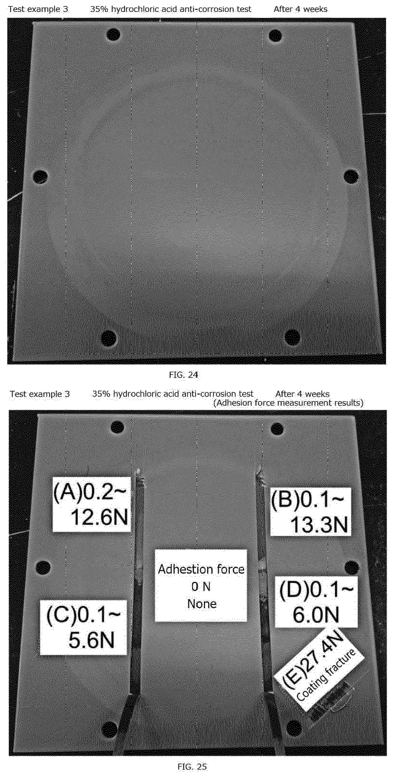

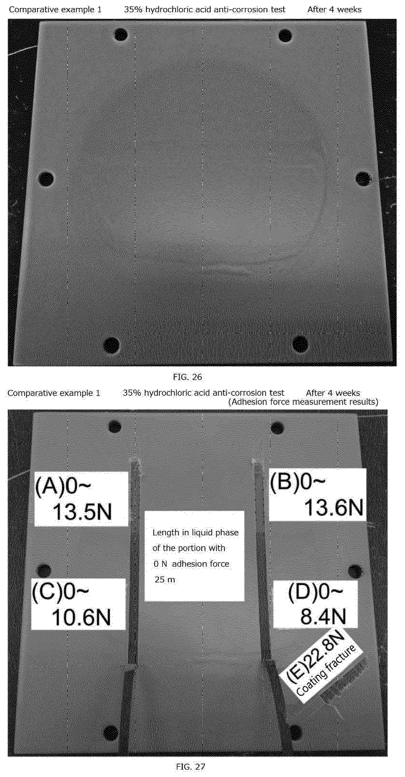

As shown in Tables 6 and 8 as well as FIGs. 6-11, 16, 17, 20-27, the test examples 1-3 with formulation of AP004 had less blister occurrence after the anti-corrosion test and showed the result of higher residual adhesion force, than the comparative example 1 without formulation of porous coordination polymer (PCP) / metal-organic framework (MOF).

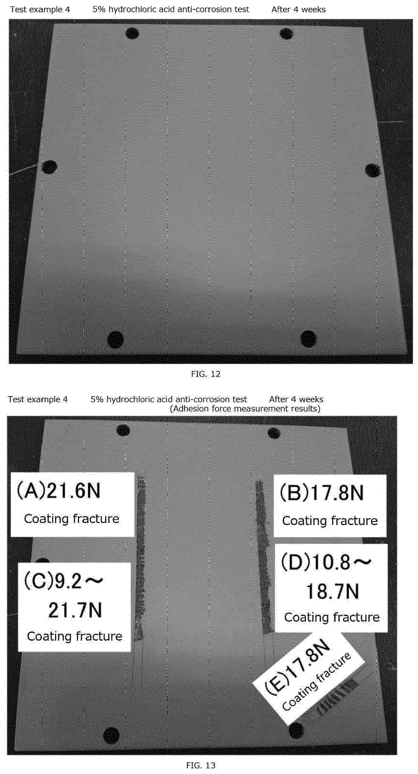

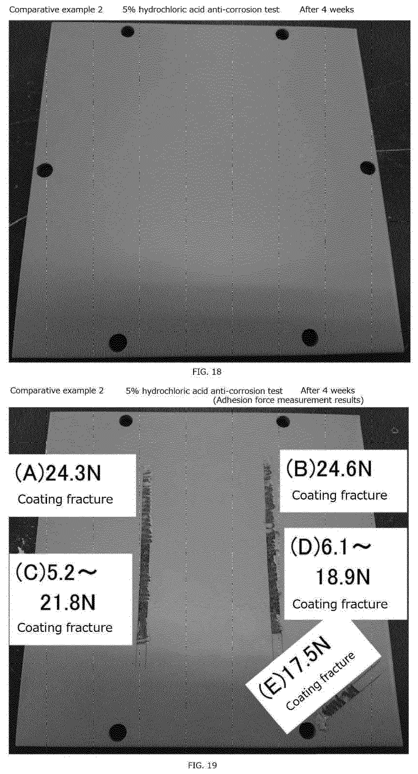

As shown in Table 7 as well as FIGs. 12, 13, 18, and 19, the test example 4 with formulation of AP006, had less blister occurrence after the anti-corrosion test and showed the result of higher residual adhesion force, than the comparative example 2 without formulation of porous coordination polymer (PCP) / metal-organic framework (MOF).

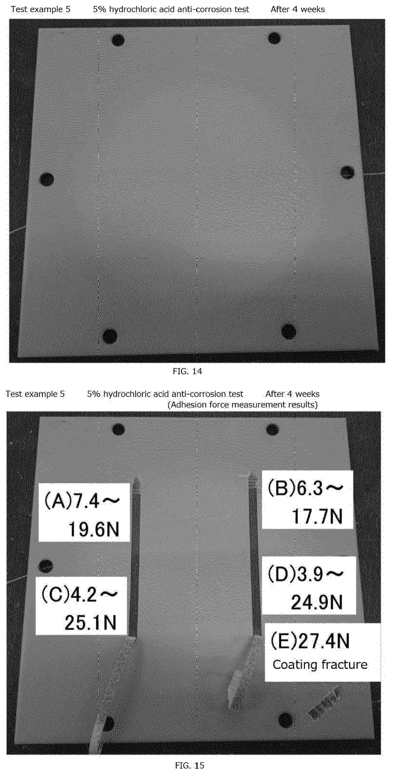

As shown in Table 6 and FIGs. 14-17, the test example 5 with formulation of MOF801(Zr) showed sufficient residual adhesion force compared to the comparative example 1.

In addition, from the results of the test examples 5 and 1-4, formulating in the fluororesin the porous coordination polymer (PCP) / metal-organic framework (MOF) whose 5% decomposition temperature from 200 °C under the condition in ambient air is higher than the melting point of fluororesin, enables to obtain a coating film with remarkably better durability, chemical resistance, permeability resistance, and corrosion resistance.

In addition, as the test example in gaseous phase also showed the result of high residual adhesion force, it is construed that porous coordination polymer (PCP) / metal-organic framework (MOF) absorbed the volatized hydrogen chloride gas. Therefore, it turned out that porous coordination polymer (PCP) / metal-organic framework (MOF) can contain corrosion of the base material, by absorbing the gas.

These effects are thought to contribute to improving anti-corrosion performance, as the layer with the formulation of porous coordination polymer (PCP) / metal-organic framework (MOF) is present directly on the primer layer.

Therefore, it deems that the paint compositions, and the coating film and the coated object thereof of the present invention can provide a coating film free from failures such as cracks, being useful with excellent durability, chemical resistance, permeability resistance, and corrosion resistance.

### [Industrial Applicability]

The powder paint compositions and the liquid paint compositions for baking comprising fluororesin, and the coating film and the coated objects comprising such powder paint compositions or liquid paint compositions for baking in the present invention, can provide a coating film free from failures such as cracks, and are preferably applicable to instruments requiring excellent durability, chemical resistance, permeability resistance, and corrosion resistance (for example but not limited to, chemical plant device, semiconductor production device, cooking apparatus, and the like).

### [Description of symbols]

- 1: Base material
- 2: Primer layer
- 3: Coating film (Lining film)
- 10: Coated object

## Claims

1. Powder paint compositions for baking, comprising
fluororesin where one or more types of porous coordination polymer (PCP) / metal-organic framework (MOF) formed by coordinate bonds between organic ligands and central metals disperse.

2. The powder paint compositions for baking of Claim 1,
wherein said porous coordination polymer (PCP) / metal-organic framework (MOF) is in a powder form,
wherein the 5% decomposition temperature of said porous coordination polymer (PCP) / metal-organic framework (MOF) from 200 °C under the condition in ambient air measured by Thermogravimeter-Differential Thermal Analysis (TG-DTA) is higher than the melting point of said fluororesin, and
wherein 0.02 wt% - 20.00 wt% of said porous coordination polymer (PCP) / metal-organic framework (MOF) is formulated with respect to entire said paint compositions.

3. The powder paint compositions for baking of Claim 1 or 2,
wherein said fluororesin is thermoplastic,
wherein said fluororesin is insoluble in both polar solvents and nonpolar solvents, and
wherein 70.00 wt% - 99.98 wt% of said fluororesin is formulated with respect to entire said paint compositions.

4. The powder paint compositions for baking of any one of Claims 1 to 3, wherein the formulation amount of said porous coordination polymer (PCP) / metal-organic framework (MOF) is 0.10 wt% - 5.50 wt% with respect to entire said paint compositions.

5. The powder paint compositions for baking of any one of Claims 1 to 4,
wherein said central metals are present as one or more types of metal ions selected from a group consisting of Al³⁺, Co³⁺, Co²⁺, Ni²⁺, Ni⁺, Cu²⁺, Cu⁺, Zn²⁺, Fe³⁺, Fe²⁺, Ti³⁺, and Zr⁴⁺, and
wherein said metal ions are present in said porous coordination polymer (PCP) / metal-organic framework (MOF) by coordinately binding to said organic ligands.

6. The powder paint compositions for baking of any one of Claims 1 to 5,
wherein at least one of said central metals carries one or more anions, and
wherein said central metals are present in said porous coordination polymer (PCP) / metal-organic framework (MOF) by coordinately binding to said organic ligands.

7. The powder paint compositions for baking of Claim 6, wherein said anions comprise one or more types of anions selected from a group consisting of OH⁻, CO₃²⁻, and O²⁻.

8. The powder paint compositions for baking of Claim 6 or 7, wherein at least one of said central metals forms oxo structures together with said anions.

9. The powder paint compositions for baking of any one of Claims 1 to 8,
wherein said organic ligands comprise one or more types of organic ligands selected from a group consisting of 1,4-benzenedicarboxylic acid, 1,3,5-benzene tricarboxylic acid, 4,4'-bipyridyl, imidazole, 1,3,5-tris(4-carboxyphenyl) benzene, fumaric acid, terephthalic acid, and maleic acid.

10. The powder paint compositions for baking of any one of Claims 1 to 9, wherein said porous coordination polymer (PCP) / metal-organic framework (MOF) provides a gas absorption feature.

11. The powder paint compositions for baking of Claim 10, wherein said gas is a corrosive gas comprising at least hydrogen chloride.

12. The powder paint compositions for baking of any one of Claims 1 to 11, wherein said porous coordination polymer (PCP) / metal-organic framework (MOF) has pores with the opening area of a pore being 0.15 nm² - 7.00 nm².

13. The powder paint compositions for baking of any one of Claims 1 to 12, wherein said porous coordination polymer (PCP) / metal-organic framework (MOF) has the specific surface area (BET specific surface area) larger than 900.00 m³/g.

14. The powder paint compositions for baking of any one of Claims 1 to 13, comprising
one or more types of hydrophobic porous coordination polymer (PCP) / metal-organic framework (MOF), and
one or more types of hydrophilic porous coordination polymer (PCP) / metal-organic framework (MOF).

15. The powder paint compositions for baking of any one of Claims 1 to 14, wherein the formulation amount of said fluororesin is 75.00 wt% - 90.00 wt% with respect to entire said paint compositions.

16. The powder paint compositions for baking of any one of Claims 1 to 15, wherein said fluororesin comprises one or more types of fluororesins selected from a group consisting of PFA, FEP, ETFE, PCTFE and ECTFE.

17. The powder paint compositions for baking of any one of Claims 1 to 16, further comprising one or more types of additives selected from a group consisting of PPS, PEEK and PES.

18. Liquid paint compositions for baking, where the powder paint compositions for baking of any one of Claims 1 to 17 disperse in a solvent.

19. A coating film comprising the powder paint compositions for baking or the liquid paint compositions for baking of any one of Claims 1 to 18.

20. The coating film of Claim 19, having the coating film thickness of 40 µm - 5000 µm.

21. A coated object, having a base material, a primer layer formed over said base material, and a single-layered or multiple-layered fluororesin coating film layer formed over said primer layer,
wherein said fluororesin coating film layer is a coating film of Claim 19 or 20.
